# EUROPÄISCHE PATENTSCHRIFT

(11) **EP 1 479 285 B1**
(45) Veröffentlichungstag und Bekanntmachung des Hinweises auf die Patenterteilung: **02.06.2010**
(21) Anmeldenummer: 04011620.4
(22) Anmeldetag: 15.05.2004
(51) Int. Cl.: A01G 3/06

(54) **Elektromotorisch betriebene Grassschere**
Electrically powered grass shear
Cisaille à gazon à moteur électrique

(30) Priorität: 21.05.2003 DE 10324285
(43) Veröffentlichungstag der Anmeldung: 24.11.2004
(60) Teilanmeldung: 10003503.9
(73) Patentinhaber: GARDENA Manufacturing GmbH, 89079 Ulm (DE)
(72) Erfinder: Kohl, Peter, 89257 Illertissen (DE); Agostini, Johannes, 89257 Illertissen (DE)

(56) Entgegenhaltungen:
- EP-A- 0 826 300
- DE-C- 3 916 145
- US-A- 3 861 127
- PATENT ABSTRACTS OF JAPAN Bd. 1997, Nr. 09, 30. September 1997 (1997-09-30) -& JP 09 135631 A (HITACHI KOKI CO LTD), 27. Mai 1997 (1997-05-27)

## Beschreibung

Die Erfindung betrifft eine elektromotorisch betriebene Grasschere mit einem Schneidkopf mit Schneidmessern, der gegenüber einem Griffteil um eine Schwenkachse verstellbar ist, wobei die Schwenkachse quer zur Arbeitsrichtung und parallel zu der Ebene verläuft, in der die Schneidmesser angeordnet sind, und wobei der Antriebsmotor im Schneidkopf untergebracht ist.

Eine derartige Grasschere ist aus der JP 9135631 A bekannt. Die bekannte Grasschere ist elektromotorisch betrieben und weist einen Schneidkopf sowie ein Griffteil auf, wobei der Schneidkopf gegenüber dem Griffteil verschwenkbar gehalten ist. Die Schneidmesser sind mittels eines Antriebsmotors antreibbar, der im Schneidkopf untergebracht ist.

Die DE 3916145 C1 betrifft eine elektromotorisch angetriebene Handgrasschere, bei der ein Schneidkopf gegenüber einem Handgriff derart verdreht werden kann, dass eine Ebene der Schneidblätter relativ zu dem Handgriff verstellbar ist. Zur Verdrehbarkeit ist zwischen einem den Handgriff bildenden Gehäuse und dem Schneidkopfgehäuse ein Zwischenstück vorgesehen. Diese Verstellmöglichkeiten lassen keine ergonomisch günstige Halterung und Führung der Grasschere zu.

Die EP 0 826 300 zeigt eine Akku-Rasenschere, bei der ein Scherenkopf um eine horizontale, in der Arbeitsrichtung verlaufende Achse gegenüber einem Griffteil schwenkbar ist, um eine Neigung des Scherkopfes einstellen zu können. Die Schwenkachse fällt dabei mit der Drehachse des Antriebsmotores zusammen, so dass eine zweckmäßige Bauform erreicht werden kann.

Der Erfindung liegt die Aufgabe zugrunde, eine Grasschere der eingangs genannten Art zu schaffen, die eine günstige Unterbringung der Elektromotors ermöglicht.

Diese Aufgabe wird dadurch gelöst, dass der Antriebsmotor in einer um die Schwenkachse gebildeten zylindrischen Hohlkammer angeordnet ist.

Am Schneidkopf lassen sich, wie an sich bekannt, abnehmbare Führungsräder anordnen und es kann in vorteilhafter Ausgestaltung der Erfindung der Griffteil mit einer Aufnahmeöffnung für einen einsteckbaren Stiel versehen werden. Die Achse dieser Aufnahmeöffnung verläuft dabei senkrecht zu der Schwenkachse um die der Schneidkopf verstellbar ist und der Stiel kann um die Achse der Aufnahmeöffnung schwenkbar und arretierbar sein, so dass die Grasschere auch von einer Bedienungsperson in aufrechter Position benutzt werden kann. Insbesondere wenn der Stiel mit einer Abwinkelung im Bereich der Aufnahmeöffnung versehen ist, wird eine leichte und ergonomisch günstige Führung erreicht, bei der es auch möglich ist, die Ebene der Schneidmesser in der gewünschten Weise einzustellen, wenn beispielsweise Grasbewuchs im Bereich unterhalb von Hecken geschnitten werden sollen.

Weitere Vorteile und Merkmale der Erfindung ergeben sich aus den Ansprüchen.

Die Erfindung ist anhand eines Ausführungsbeispiels in der Zeichnung dargestellt und wird im folgenden erläutert. Es zeigen:
- Fig. 1: eine schematische Seitenansicht einer elektromotorisch betriebenen Grasschere nach der Erfindung in zwei verschiedenen Schwenkstellungen des Griffteiles gegenüber dem Schneidkopf,
- Fig. 2: einen Längsschnitt durch die Mittelebene der Grasschere nach Fig. 1, und

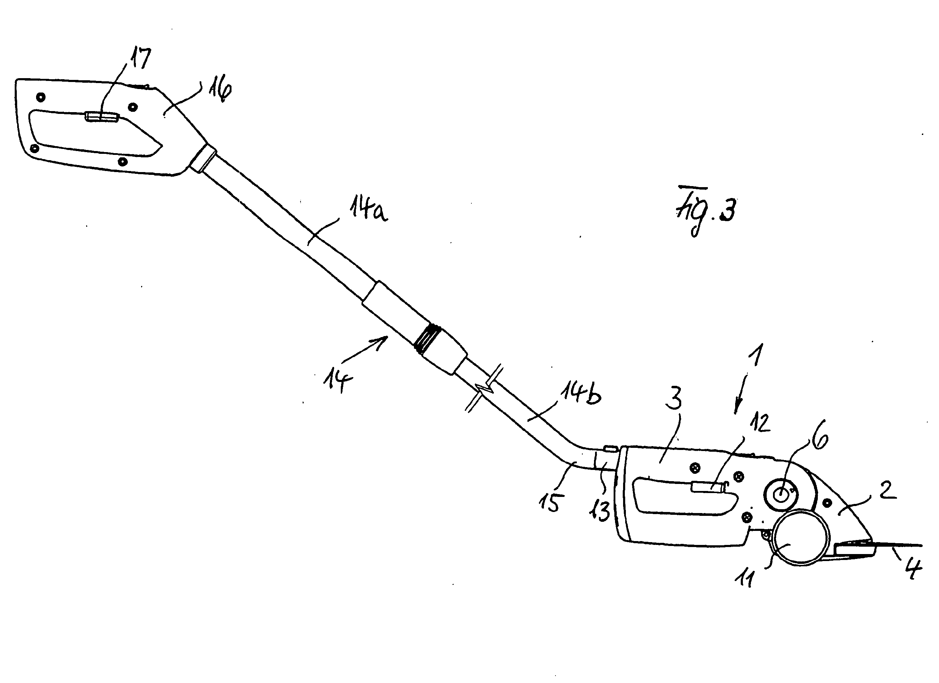

- Fig. 3: die Grasschere der Fig. 1 mit einem Führungsstiel mit eigenem Handgriff.

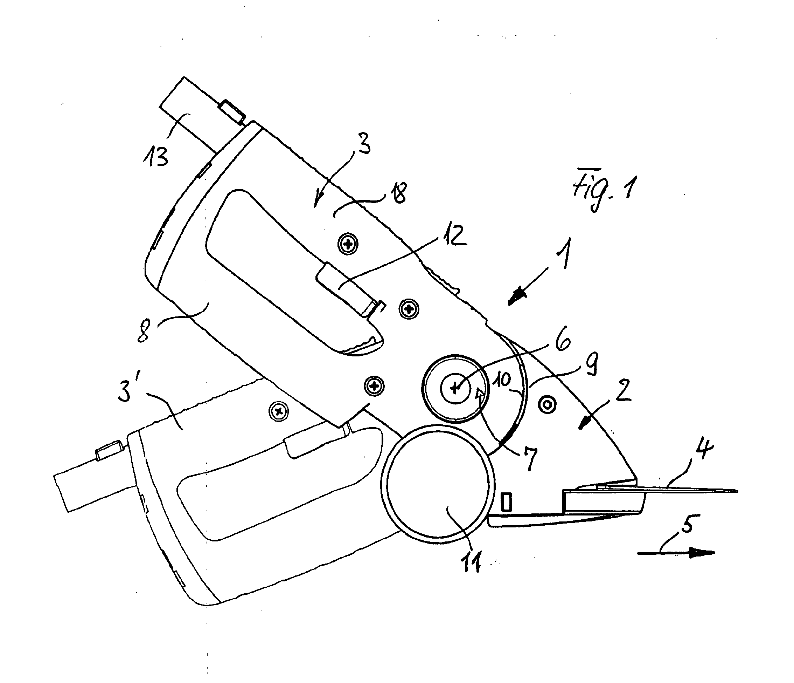

Die Fig. 1 zeigt eine Handgrasschere 1, die einen Schneidkopf 2 mit Schneidmessern 4 und einen gegenüber dem Schneidkopf 2 schwenkbaren Griffteil 3 aufweist. Die Schneidmesser 4 bestehen dabei in bekannter Weise aus einem oszillierenden Obermesser und einem feststehenden Untermesser, die in einer gemeinsamen Ebene verlaufen und durch Handbetätigung am Griffteil 3 in der Arbeitsrichtung 5 bewegt werden können.

Der Griffteil 3 ist um eine Schwenkachse 6 gegenüber dem Schneidkopf verschwenkbar, die quer zur Arbeitsrichtung 5 und parallel zu der Ebene verläuft, in der die Schneidmesser 4 angeordnet sind. Der Griffteil 3 lässt sich daher um diese Schwenkachse 6 von der dünn ausgezogenen Stellung 3' in die Stellung 3 nach Fig. 1 verschwenken und in der jeweiligen Schwenklage auch arretieren, was durch nicht näher gezeigte Klemmeinrichtungen an der Schwenkachse 6 geschehen kann. Die Schwenkachsenanordnung kann, wie schematisch angedeutet, auch mit Anzeigemarkierungen 7 ausgerüstet sein, mit deren Hilfe die gewünschte Schwenklage zwischen Griffteil 3 und Schneidkopf 2 nach außen angezeigt werden kann.

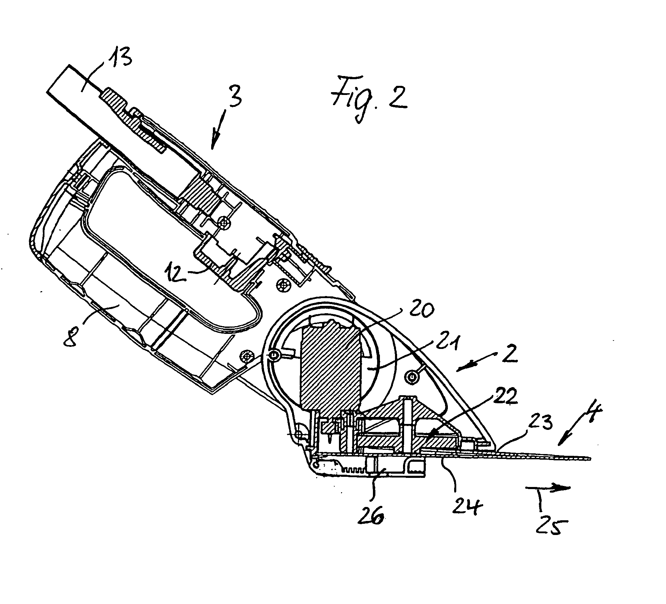

Der elektrische Antriebsmotor 20 für die Schneidmesser 4 ist innerhalb des Schneidkopfes 2 angeordnet. Der elektrische Antriebsmotor 20 ist dabei - siehe Fig. 2 - in einer zylindrischen Hohlkammer 21 angeordnet, die im Schneidkopf 2 gebildet ist. Die Achse der Hohlkammer 21 bildet die Schwenkachse 6 zwischen dem Griffteil 3 und dem Schneidkopf 2. Der Antriebsmotor 20 wirkt in an sich bekannter Weise auf einen Exzenterantrieb 22, der wiederum ein bewegliches Obermesser 23 der Messeranordnung 4 in Bewegung setzt, wobei der Messeranordnung 4 noch ein feststehendes Untermesser 24 zugeordnet ist. Die Messeranordnung 4 lässt sich aus der in Fig. 2 dargestellten Lage im Sinne des Pfeiles 25 abziehen und durch eine neue Messeranordnung ersetzen, wenn Verschleiß aufgetreten ist. Die Messeranordnung 4 wird dabei in einem Führungsschlitz zwischen dem Exzenterantrieb 22 und einem Schneidkopfunterteil 26 geführt und durch eine Arretierklappe gesichert, die in Fig. 2 jedoch nicht gezeigt ist. Die Akkumulatoren für den Betrieb des Elektromotors sind im unteren Arm 8 des Griffteiles 3 untergebracht und die Stromversorgung des Elektromotors kann in einfacher Weise durch Kabel vorgenommen werden, welche durch Schlitze in den seitlichen Wangen der Hohlkammer 21 und in den daran angrenzenden Teilen des Griffteiles 3 hindurchgeführt werden. Griffteil 3 und Schneidkopf 2 grenzen mit kreisbogenförmigen Führungen 9, 10 aneinander an. Am Schneidkopf 2 sind schließlich abnehmbare Räder 11 vorgesehen, welche die an sich bekannte Führung der Grasschere erlauben. Der Griffteil 3 ist mit einem Handschalter 12 ausgestattet, über den die Stromzuführung zum Antriebsmotor freigegeben oder unterbunden werden kann.

Der Griffteil 3 besitzt an seinem von der Schwenkachse 6 abgewandten Ende eine Einstecköffnung 13, die hier als eine hülsenförmige Führung ausgebildet ist, in die nach Fig. 2 das untere Ende eines Stieles 14 einschiebbar ist, der aus zwei teleskopartig gegeneinander verschiebbaren Rohrteilen 14a und 14b besteht, von denen das dem Griffteil 3 zugewandte Rohrteil 14b im Bereich dieses Griffteiles 3 eine Abknickung 15 besitzt.

Das obere Rohrteil 14a ist an seinem freien Ende mit einem Handgriff 16 ausgerüstet, der einen Betätigungsschalter 17 aufweist und über nicht näher gezeigte Verbindungskabel mit der mit dem Handschalter 12 des Griffteiles 3 verbundenen elektrischen Schaltanordnung in Verbindung steht. Durch Betätigung des Handschalters 17 kann daher der Antriebsmotor für die Schneidmesser 4 an- oder abgeschaltet werden und es wird möglich, die Handgrasschere 1 in weitgehend aufrechter Haltung über den Stiel 14 zu führen. Über die Abknickung 15 bleibt die Grasschere 1 dabei so ausgerichtet, dass ihre Schneidmesser parallel zum Boden verlaufen, wenn die Grasschere mit Hilfe der Räder 11 geführt ist.

Innerhalb der Hülse 13 kann eine Arretierung vorgesehen werden, mit der der Stiel 14 sowohl in Axialrichtung als auch in Umfangsrichtung festgehalten werden kann. Dabei kann die Arretierung mit entsprechenden Gegenstücken am Stiel 14 so zusammenwirken, dass das Stielende in der Hülse 13 auch in gewissem Umfang verschwenkt werden kann. Eine Führung der Grasschere 1 über den Stiel 14 ist daher auch dann möglich, wenn der Stiel 14 nicht in einer senkrecht durch die Ebene der Schneidmesser 4 verlaufenden Mittelebene steht.

Obwohl daher die Ausgestaltung der Grasschere 1 so getroffen ist, dass der Griffteil 3, insbesondere sein oberer von Hand zu umfassender Bügel 18 immer in der eben erwähnten Mittelebene durch die Schneidmesserebene steht, was eine ergonomisch günstige Führung der Grasschere ermöglicht, wird es durch Schwenken des Stieles jedenfalls auch möglich, die Schere bei Führung über den Stiel parallel zum Boden zu halten, obwohl die Führung von der Seite her erfolgt. Dies erlaubt weitere Einsatzmöglichkeiten der neuen Schere.

## Patentansprüche

1. Elektromotorisch betriebene Grasschere mit einem Schneidkopf (2) mit Schneidmessern (4), der gegenüber einem Griffteil (3) um eine Schwenkachse (6) verstellbar ist, wobei die Schwenkachse (6) quer zur Arbeitsrichtung (5) und parallel zu der Ebene verläuft, in der die Schneidmesser (4) angeordnet sind, und wobei der Antriebsmotor (20) im Schneidkopf (2) untergebracht ist, **dadurch gekennzeichnet, dass** der Antriebsmotor (20) in einer um die Schwenkachse (6) gebildeten zylindrischen Hohlkammer (21) angeordnet ist.

2. Grasschere nach Anspruch 1, **dadurch gekennzeichnet, dass** am Schneidkopf (2) abnehmbare Führungsräder (11) angeordnet sind.

3. Grasschere nach Anspruch 1, **dadurch gekennzeichnet, dass** der Griffteil (3) mit einer Aufnahmeöffnung (13) für einen einsteckbaren Stiel (14) versehen ist.

4. Grasschere nach Anspruch 3, **dadurch gekennzeichnet, dass** die Achse der Aufnahmeöffnung (13) senkrecht zu der Schwenkachse (6) verläuft, um die der Schneidkopf (2) verstellbar ist.

5. Grasschere nach Anspruch 4, **dadurch gekennzeichnet, dass** der Stiel (14) um die Achse der Aufnahmeöffnung (13) schwenkbar und arretierbar ist.

6. Grasschere nach Anspruch 5, **dadurch gekennzeichnet, dass** der Stiel (14) mit einer Abwinkelung (15) insbesondere im Bereich der Aufnahmeöffnung (13) versehen ist.

## Claims

1. Electromotively operated grass shears having a cutting head (2) with cutting blades (4), which cutting head can be adjusted about a pivot axis (6) in relation to a handle part (3), with the pivot axis (6) running transverse to the operating direction (5) and parallel to the plane in which the cutting blades (4) are arranged, and with the drive motor (20) being accommodated in the cutting head (2), **characterized in that** the drive motor (20) is arranged in a cylindrical hollow chamber (21) which is formed around the pivot axis (6) .

2. Grass shears according to Claim 1, **characterized in that** removable guide wheels (11) are arranged on the cutting head (2).

3. Grass shears according to Claim 1, **characterized in that** the handle part (3) is provided with an accommodation opening (13) for an insertable shank (14).

4. Grass shears according to Claim 3, **characterized in that** the axis of the accommodation opening (13) runs perpendicular to the pivot axis (6) about which the cutting head (2) can be adjusted.

5. Grass shears according to Claim 4, **characterized in that** the shank (14) can be pivoted about the axis of the accommodation opening (13) and can be locked.

6. Grass shears according to Claim 5, **characterized in that** the shank (14) is provided with an angled portion (15), in particular in the region of the accommodation opening (13).

## Revendications

1. Cisaille à gazon entraînée par un moteur électrique avec une tête de coupe (2) avec des couteaux (4), qui peut être déplacée autour d'un axe de pivotement (6) par rapport à une partie de préhension (3), l'axe de pivotement (6) s'étendant transversalement à la direction de travail (5) et parallèlement au plan dans lequel sont disposés les couteaux (4), et le moteur d'entraînement (20) étant monté dans la tête de coupe (2), **caractérisée en ce que** le moteur d'entraînement (20) est disposé dans une chambre creuse cylindrique (21) formée autour de l'axe de pivotement (6).

2. Cisaille à gazon selon la revendication 1, **caractérisée en ce que** des roues de guidage (11) amovibles sont disposées sur la tête de coupe (2).

3. Cisaille à gazon selon la revendication 1, **caractérisée en ce que** la partie de préhension (3) est pourvue d'une ouverture de réception (13) pour un manche enfichable (14).

4. Cisaille à gazon selon la revendication 3, **caractérisée en ce que** l'axe de l'ouverture de réception (13) s'étend perpendiculairement à l'axe de pivotement (6) autour duquel la tête de coupe (2) peut être déplacée.

5. Cisaille à gazon selon la revendication 4, **caractérisée en ce que** le manche (14) peut pivoter autour de l'axe de l'ouverture de réception (13) et peut être bloqué.

6. Cisaille à gazon selon la revendication 5, **caractérisée en ce que** le manche (14) est pourvu d'un coude (15), notamment dans la région de l'ouverture de réception (13).
